# EUROPEAN PATENT SPECIFICATION

(11) **EP 1 668 977 B1**
(45) Date of publication and mention of the grant of the patent: **05.03.2008**
(21) Application number: 05077622.8
(22) Date of filing: 18.10.2005
(51) Int. Cl.: A01D 78/10

(54) **A hay-making machine**
Heuwerbungsmaschine
Machine de fenaison

(30) Priority: 13.12.2004 NL 1027727
(43) Date of publication of application: 14.06.2006
(73) Proprietor: Lely Enterprises AG, 6300 ZUG (CH)
(72) Inventor: Havermans, Cornelis C. F., 4761 WX Zevenbergen (NL); Stremmelaar, Egbert A., 7846 AD Noord-Sleen (NL)
(74) Representative: Corten, Maurice Jean F.M.

(56) References cited:
- EP-A- 0 559 024
- EP-A- 0 622 006
- DE-A1- 19 730 860
- DE-U1- 9 419 786

## Description

The invention relates to a haymaking machine according to the preamble of claim 1.

Such a haymaking machine is known from German patent application DE19730860-A1. This known haymaking machine intended for being coupled behind a tractor comprises a central frame orientated in the longitudinal direction with a rake rotor disposed on both sides. These rotors are fastened to the central frame via arms and comprise a front rotor and a rear rotor. At the front side of the central frame, a coupling frame is rotatably disposed for coupling to the tractor. At the rear side of the frame, there is disposed a wheel set for supporting the machine on the ground. This wheel set comprises a cross beam which is fixedly connected to the central frame, the two ends of said cross beam being provided with a wheel which is pivotable about a vertical axis. The two wheels are interconnected via a steering rod system. An elongated steering rod connects this steering rod system to the coupling frame. When making a bend, the orientation of the central frame relative to the coupling frame will be transmitted to the two wheels via the elongated steering rod and the steering rod system. A drawback of this haymaking machine is that steering of the wheels takes place via the coupling frame via a complicated construction comprising many axes of rotation.

The invention aims inter alia at providing a haymaking machine having a simpler construction.

To this end, according to the invention, a haymaking machine of the type mentioned in the preamble comprises the features of the characterizing part of claim 1. Owing to the fact that the entire wheel set is rotatable as a whole about a vertical wheel set axis, a steering rod is superfluous.

According to a favourable embodiment, the haymaking machine is capable of being put in a side delivery position in which, seen in the normal direction of travel, the working area of the rear rotor overlaps the working area of the front rotor. Such a side delivery position enables to produce wide swaths owing to the fact that the crop from two working runs can be deposited in one swath. By working area is meant that part of the working width of the machine where the rotor exerts a raking function on the crop lying on the ground. The working area may depend, for example, on the orientation of the central frame or the way in which the rotor arms are controlled.

According to another favourable embodiment, the haymaking machine is capable of being put in a multiple swath position, in which the rotors are capable of being placed in such a way that the working area of the rear rotor is located at some distance beside the working area of the front rotor in such a way that a swath can be formed between the two rotors. In case of high and dense crop it is advantageous to deposit this crop in small swaths, i.e. that two swaths are formed over the entire working width of the machine. To this end, the wheel set is fixed under an angle with the central frame, so that the machine will be located obliquely behind the tractor in the operative position. The rear rotor will thus be located at some distance from the front rotor and will, therefore, not pick up the crop from the front rotor.

In particular, in the multiple swath position, the central frame is capable of being supported as a whole between two swaths on the ground via the central wheel set. There is thus created more space for the swath. This is in particular advantageous relative to wheel sets having two wheels and the swath to be formed being deposited between these wheels. The distance between the wheels of such a wheel set is limited, so that only relatively narrow swaths are possible.

In a favourable embodiment, the rotors are rotatable in the same direction.

In another favourable embodiment, the coupling frame comprises a vertical coupling axis and the wheel set is connected to the coupling frame via a drawbar, a rotation of the central frame about the coupling axis relative to the coupling frame realising a rotation of the wheel set in opposite direction relative to the frame.

In again another favourable embodiment, in at least the side delivery position, the produced part of the wheel axis intersects with the circumference of a rotor. This results in a relatively short construction which is easily manoeuvrable.

In order to make it possible to put the haymaking machine remotely and in a simple manner in a particular operative position, the central wheel set comprises an offset-cylinder for rotation of the wheel set about the wheel set axis relative to the central frame.

It is further advantageous if the arms are capable of being folded up for putting the haymaking machine in a transport position and the folding up axes are orientated parallel to the normal direction of travel of the haymaking machine in the transport position.

Some embodiments of a haymaking machine according to the invention will be explained hereinafter in further detail with reference to the accompanying figures, in which:
Figure 1 is a schematic plan view of a haymaking machine according to the invention in the side delivery position;
Figure 2 is a schematic plan view of the haymaking machine according to the invention in the multiple swath position;
Figure 3 is a plan view of the haymaking machine in the side delivery position;
Figure 4 shows a detail of the arm of the front rotor in the operative position in a cross-sectional view along the line L in the viewing direction K, and
Figure 5 shows a detail of the arm of the front rotor in the transport position.

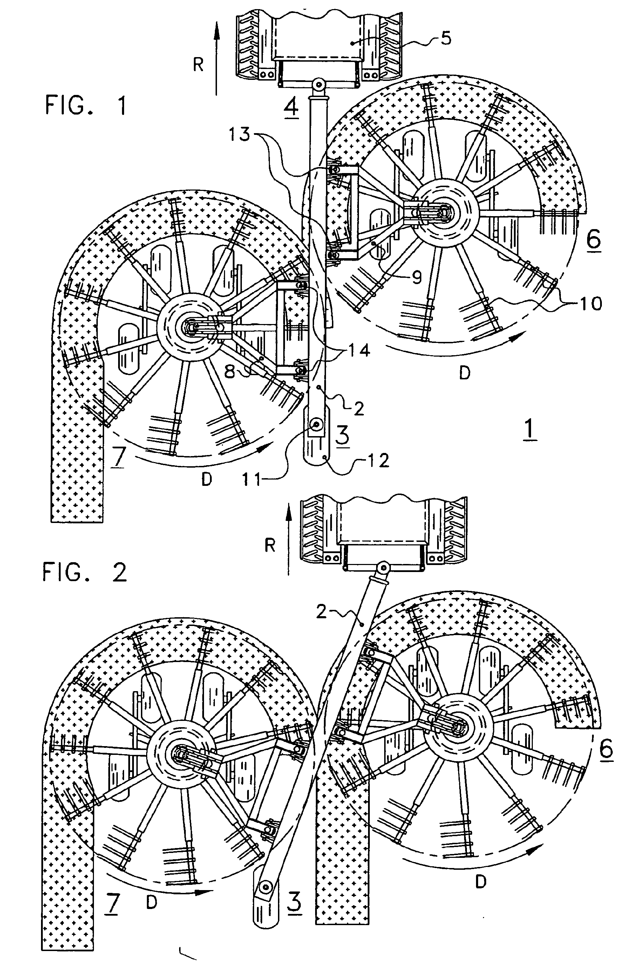

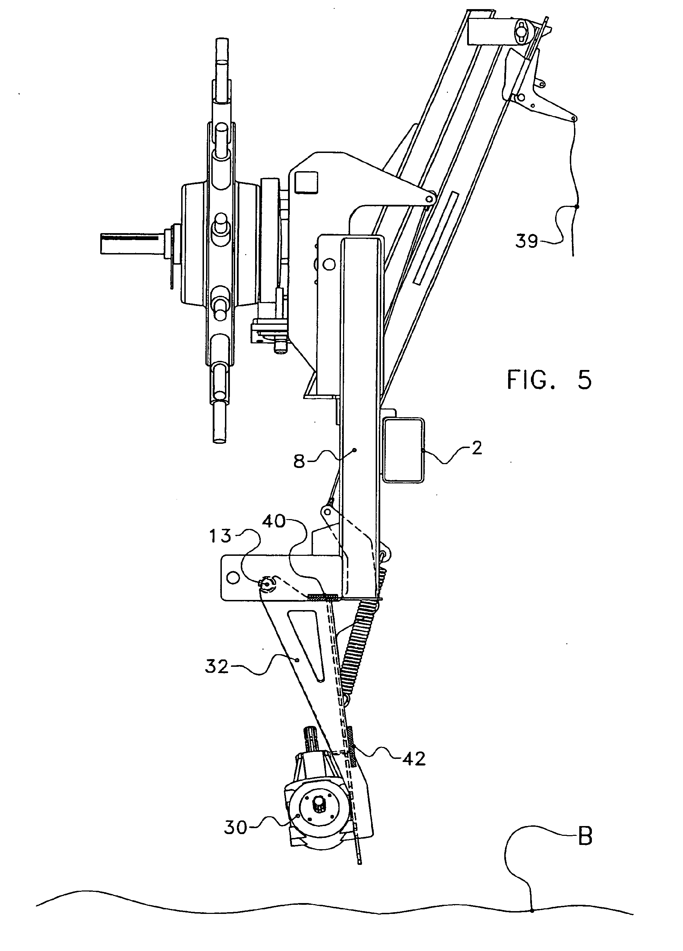

Figure 1 shows a haymaking machine 1 for raking crop lying on the ground, comprising a central frame 2 which is capable of being supported on the ground via a central wheel set 3 and which, seen in the normal direction of travel, is disposed at the rear side of the haymaking machine 1, a coupling frame 4 for fastening to a tractor 5 and forming the connection between the tractor 5 and the central frame 2, and drivable rotors 6, 7 fastened to the central frame 2 via arms 8, 9, which rotors 6, 7 are provided with tine arms 10 with rake tines and comprise, seen in the longitudinal direction of the central frame 2, at least a front rotor 6 and a rear rotor 7, the central wheel set 3 being both rotatable and adjustable about a vertical wheel set axis 11 relative to the central frame 2. The tractor 5 is depicted only partially. The haymaking machine 1 is shown in the side delivery position in which, seen in the normal direction of travel R, the working area of the rear rotor 7 overlaps the working area of the front rotor 6. The central wheel set 3 comprises only one single wheel 12. However, the invention is not limited to a wheel set having one single wheel, but may comprise any arbitrarily chosen number of wheels, disposed on the same collective axis of rotation, as well as rotatable independently of each other about axes of rotation extending in line with each other, as well as rotatable about axes of rotation that are not orientated in line with each other. The produced part of the wheel axis of the wheel 12 intersects with the circumference of the rear rotor 7. Owing to the fact that said wheel 12 is disposed so close to the rotor, the haymaking machine 1 is short and easily manoeuvrable. The arms 8, 9 are capable of being folded up for putting the haymaking machine 1 in a transport position (Figure 5), in which the folding up axes 13, 14 are orientated parallel to the normal direction of travel R of the haymaking machine 1 in the transport position.

Figure 2 shows the haymaking machine 1 of Figure 1, put in the multiple swath position, the rotors 6, 7 being placed in such a way that the working area of the rear rotor 7 is located at some distance beside the working area of the front rotor 6 in such a way that a swath can be formed between the two rotors 6, 7. In this position, the central wheel set 3 is supported as a whole between two swaths on the ground. Owing to the fact that the wheel 12 is rotatable about a wheel set axis 11 and is capable of being fixedly disposed, the orientation of the central frame 2 relative to the tractor 5 can be changed. Like in Figure 1, the two rotors 6, 7 rotate in the same direction of rotation D. Owing to the fact that the space between the two rotors 6, 7 is larger than in the situation of Figure 1, the crop which is displaced by the front rotor from the right to the left is not picked up by the rear rotor 7 and there are formed two swaths.

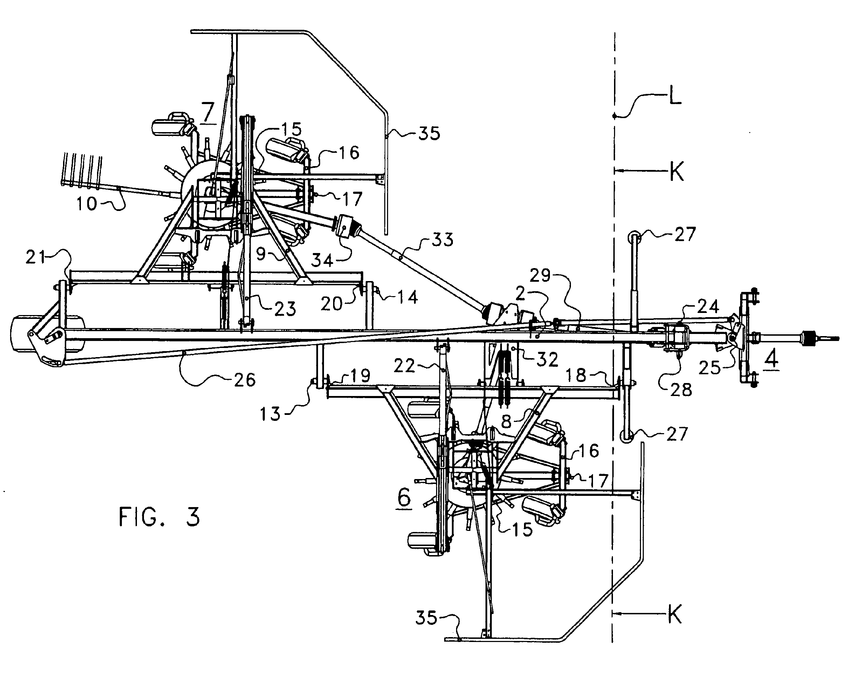

Figure 3 shows the haymaking machine 1 of Figures 1 and 2 in detail in the side delivery position. For easy reference, only one tine arm 10 with tines of the rear rotor 7 is depicted in its entirety. The tine arms 10 with the tines fastened thereto are of the known controlled type. The rotors 6, 7 are supported on the ground, each via a rotor wheel set 15 having each four pivoting wheels. The two front pivoting wheels are fastened to a cross beam 16 which is capable of swivelling about a swivel axis 17 orientated in the direction of travel R. To enable proper functioning also in hilly terrain, the swivelling wheels are also capable of being fixed.

The rotors 6, 7 are fastened to the central frame 2 via an arm 8, respectively 9. Said arm 8, respectively 9 comprises two arm portions 18, 19, respectively 20, 21, which are each connected to the central frame 2 by means of a hinge, the folding up axes 13, 14 extending through the two hinges. Said folding up axes 13, 14 intersect with the rotors 6, 7 in the operative position. The folding up axes 13, 14 are also disposed at some distance beside the central frame 2. The rotors 6, 7 are each capable of being put in a transport position with the aid of a folding up cylinder 22, 23, the rotor axis being orientated in a horizontal plane. By means of said cylinder the rotors 6, 7 are also capable of being placed in a headland position, in which position the rotor plane is lifted approximately half a meter parallel to the ground surface relative to the operative position.

The coupling frame 4 is disposed at the front side of the central frame 2. The latter is capable of being coupled to a non-shown tractor via a known three-point linkage. Such a three-point linkage ensures a better stability in comparison with a linkage only made via the lifting arms of the tractor. The central frame 2 further comprises at the front side a horizontal pivot axis 24. By means of the combination of a three-point linkage and the horizontal pivot axis 24 the lower coupling points of the coupling frame 4 will be pressed into the lifting arms of the tractor. The coupling frame 4 further comprises a vertically orientated coupling axis 25 and the central wheel set 3 is connected to the coupling frame 4 via a drawbar 26, a rotation of the central frame 2 about the coupling axis 25 relative to the coupling frame 4 realising a rotation in opposite direction of the central wheel set 3 relative to the central frame 2. This construction of a forced steering, known per se, enables a short turning circle.

To make it possible to place the haymaking machine 1 in a parking position separately from the tractor 5, there are disposed two telescopic legs 27. There is further disposed a pin 28 for the purpose of fixing the coupling frame 4 to the central frame 2 in the parking position. This prevents a downward movement about the horizontal pivot axis 24.

The drive of at least the front rotor 6 comprises a longitudinal axis 29 which is substantially orientated in the longitudinal direction of the haymaking machine 1, a square gearbox 30 which is connected to the longitudinal axis 29 at the front side, and a square axis 31 forming the connection between the gearbox 30 and the rotor 6, the gearbox 30 being connected to a gearbox arm 32 and the gearbox arm 32 being movable independently of the arm 8. The gearbox arm 32 is movable about the folding up axis 13. The central frame 2 comprises a stop 42 for limiting the freedom of rotation of the gearbox arm 30 in at least the operative position. The drive of the rear rotor 7 takes place via a direct axial connection with the gearbox 30. For this purpose, the rear rotor 7 comprises a fixed coupling point 34 and the connection between said coupling point 34 and the gearbox 30 is formed by a standard telescopic coupling axis 33 with a cardan coupling provided at each connecting point.

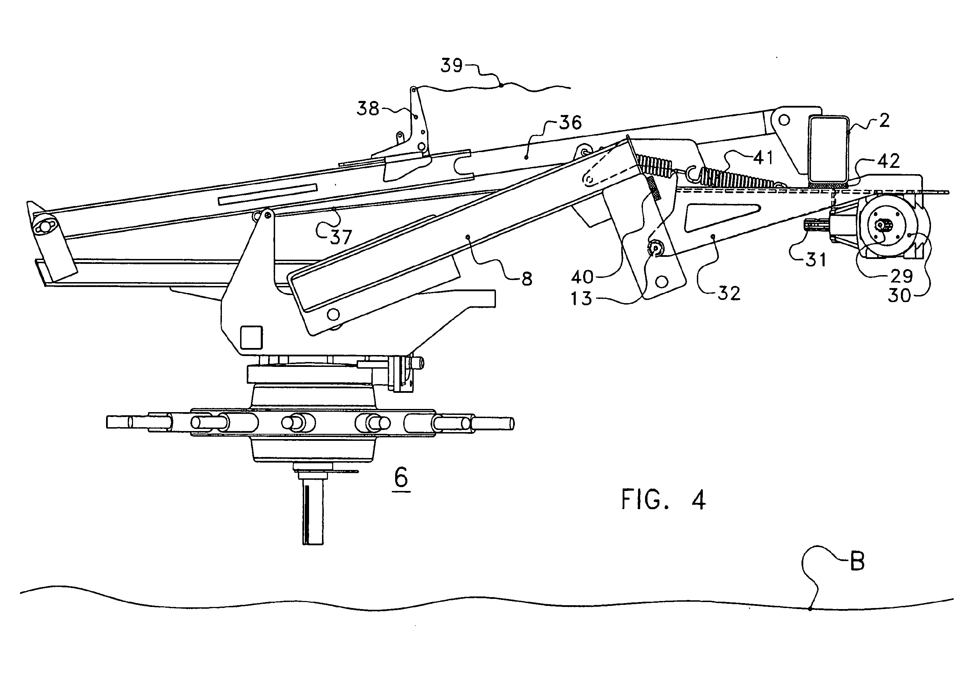

The construction of the gearbox arm 32 is shown in detail in Figures 4 and 5 as a cross-section along the line L in Figure 3 in the direction of the arrow K. In these figures, the connecting axes, the rotor arms, the protective bracket 35 and the wheel set 15 of the rotor 6 are omitted. Figure 4 shows the situation in the operative position, in which the rotor 6 assumes the lowest position, i.e. rests with the wheel set upon the ground. Figure 5 shows the situation in the transport position. For reasons of orientation also the ground B is indicated.

In the situation of Figure 4, the folding up cylinder 36 is in its fully extended position and the wheel set of the rotor bears upon the ground B. The gearbox arm 32 presses against the central frame 2 via the stop 42.

In order to put the rotor in the (non-shown) headland position, the folding up cylinder 36 is energized so that the arm 8 is lifted. In this headland position, the rotor 6 is in line with the arm 8 and the gearbox arm 32. A stop on the folding up cylinder 36 prevents further folding up. At the upper side, the rotor 6 is connected to the gearbox arm 32 via a cable 37. This means that the rotor 6 remains parallel to the ground B during lifting to the headland position and further folding up of the rotor 6 against the gearbox arm 32 is prevented. In order to fold up the rotor 6 further, the stop on the folding up cylinder 36 is released via a lever 38. Said lever 38 is operated from the tractor 5 via a cord 39. Further retraction of the folding up cylinder 36 puts the rotor 6 in the transport position as shown in Figure 5. In this position, the central frame 2 serves as a stop for the arm 8. The arm 8 further comprises a stop 40 for limiting the freedom of rotation of the gearbox arm 32 in at least the transport position. In the headland position, the arm 8 makes contact with the gearbox arm 32 via said stop 40.

When moving the arm 8 upwards, the gearbox 30 will be taken along via said stop 40 and make the same movement about the folding up axis 13 until the transport position of Figure 5 has been reached. The arm 8 and the gearbox arm 32 are interconnected via a spring 41, so that the gearbox arm 32 is pressed against the stop 40. In the operative position, the spring 41 exerts an upwardly orientated relieving force on the rotor 6. In order also to relieve the rear rotor 7, also here a spring is provided (Figure 3).

All stops are made of synthetic material in order to prevent the construction from being damaged. The invention is not limited to a haymaking machine having two rotors, but may also comprise more rotors. Furthermore, the invention is not limited to the type of rotor described.

## Claims

1. A haymaking machine 1 for raking crop lying on the ground, comprising a central frame 2 which is capable of being supported on the ground via a central wheel set 3 and which, seen in the normal direction of travel, is disposed at the rear side of the haymaking machine 1, a coupling frame 4 for fastening to a tractor 5 and forming the connection between the tractor 5 and the central frame 2, and drivable rotors 6, 7 fastened to the central frame 2 via arms 8, 9, which rotors 6, 7 are provided with tine arms 10 with rake tines and comprise, seen in the longitudinal direction of the central frame 2, at least a front rotor 6 and a rear rotor 7, **characterized in that** the central wheel set 3 is both rotatable and adjustable about a vertical wheel set axis 11 relative to the central frame 2, is capable of being fixed under an angle with the central frame, and **in that** the central wheel set 3 comprises only one single wheel 12.

2. A haymaking machine 1 as claimed in claim 1, **characterized in that** the haymaking machine 1 is capable of being put in a side delivery position in which, seen in the normal direction of travel, the working area of the rear rotor 7 overlaps the working area of the front rotor 6.

3. A haymaking machine 1 as claimed in claim 1 or 2, **characterized in that** the haymaking machine 1 is capable of being put in a multiple swath position, in which the rotors 6, 7 are capable of being placed in such a way that the working area of the rear rotor 7 is located at some distance beside the working area of the front rotor 6 in such a way that a swath can be formed between the two rotors 6, 7.

4. A haymaking machine 1 as claimed in any one of the preceding claims, **characterized in that**, in the multiple swath position, the central frame 2 is capable of being supported as a whole between two swaths on the ground via the central wheel set 3.

5. A haymaking machine 1 as claimed in any one of the preceding claims, **characterized in that** the rotors 6, 7 are rotatable in the same direction.

6. A haymaking machine 1 as claimed in any one of the preceding claims, **characterized in that** the coupling frame 4 comprises a vertical coupling axis 25, and **in that** the central wheel set 3 is connected to the coupling frame 4 via a drawbar 26, a rotation of the central frame 2 about the coupling axis 25 relative to the coupling frame 4 realising a rotation in opposite direction of the central wheel set 3 relative to the central frame 2.

7. A haymaking machine 1 as claimed in any one of claims 2 to 6, **characterized in that**, at least in the side delivery position, the produced part of the wheel axis intersects with the circumference of the rear rotor 7.

8. A haymaking machine 1 as claimed in any one of the preceding claims, **characterized in that** the central wheel set 3 comprises an offset-cylinder for rotation of the central wheel set 3 about the wheel set axis 11 relative to the central frame 2.

9. A haymaking machine 1 as claimed in any one of the preceding claims, **characterized in that** the arms 8, 9 are capable of being folded up for putting the haymaking machine 1 in a transport position, the folding up axes 13, 14 being orientated parallel to the normal direction of travel of the haymaking machine 1 in the transport position.

## Patentansprüche

1. Heuwerbungsmaschine 1 zum Rechen von auf dem Boden liegendem Gut mit einem zentralen Rahmen 2, der über einen zentralen Radsatz 3 auf dem Boden abstützbar ist und in Fahrtrichtung gesehen auf der Rückseite der Heuwerbungsmaschine 1 angeordnet ist, mit einem Verbindungsrahmen 4 zum Anschließen an einen Schlepper 5 und zum Herstellen der Verbindung zwischen dem Schlepper 5 und dem zentralen Rahmen 2 sowie mit antreibbaren Rotoren 6, 7, die über Arme 8, 9 mit dem zentralen Rahmen 2 verbunden sind, wobei die Rotoren 6, 7 Zinkenarme 10 mit Rechzinken aufweisen und in Längsrichtung des zentralen Rahmens 2 gesehen mindestens einen vorderen Rotor 6 und einen hinteren Rotor 7 umfassen,
**dadurch gekennzeichnet, dass** der zentrale Radsatz 3 um eine vertikale Radsatzachse 11 relativ zu dem zentralen Rahmen 2 sowohl drehbar als auch einstellbar ist, dass er in einem Winkel zu dem zentralen Rahmen festlegbar ist, und dass der zentrale Radsatz 3 nur ein einziges Rad 12 umfasst.

2. Heuwerbungsmaschine 1 nach Anspruch 1,
**dadurch gekennzeichnet, dass** die Heuwerbungsmaschine 1 in eine Seitenschwadposition einstellbar ist, in der in Fahrtrichtung gesehen der Arbeitsbereich des hinteren Rotors 7 den Arbeitsbereich des vorderen Rotors 6 überlappt.

3. Heuwerbungsmaschine 1 nach Anspruch 1 oder 2,
**dadurch gekennzeichnet, dass** die Heuwerbungsmaschine 1 in eine Mehrschwadposition einstellbar ist, in der die Rotoren 6, 7 derart einstellbar sind, dass der Arbeitsbereich des hinteren Rotors 7 in einigem Abstand neben dem Arbeitsbereich des vorderen Rotors 6 liegt, so dass zwischen den beiden Rotoren 6, 7 ein Schwad gebildet werden kann.

4. Heuwerbungsmaschine 1 nach einem der vorhergehenden Ansprüche,
**dadurch gekennzeichnet, dass** der zentrale Rahmen 2 in der Mehrschwadposition als Ganzes über den zentralen Radsatz 3 zwischen zwei Schwaden auf dem Boden abgestützt werden kann.

5. Heuwerbungsmaschine 1 nach einem der vorhergehenden Ansprüche,
**dadurch gekennzeichnet, dass** die Rotoren 6, 7 in derselben Richtung drehbar sind.

6. Heuwerbungsmaschine 1 nach einem der vorhergehenden Ansprüche,
**dadurch gekennzeichnet, dass** der Verbindungsrahmen 4 eine vertikale Verbindungsachse 25 umfasst, und dass der zentrale Radsatz 3 mit dem Verbindungsrahmen 4 über eine Zugschiene 26 verbunden ist, wobei eine Drehung des zentralen Rahmens 2 um die Verbindungsachse 25 relativ zu dem Verbindungsrahmen 4 eine Drehung in entgegengesetzter Richtung des zentralen Radsatzes 3 relativ zu dem zentralen Rahmen 2 bewirkt.

7. Heuwerbungsmaschine 1 nach einem der Ansprüche 2 bis 6,
**dadurch gekennzeichnet, dass** zumindest in der Seitenschwadposition der verlängerte Teil der Radachse den Umfang des hinteren Rotors 7 schneidet.

8. Heuwerbungsmaschine 1 nach einem der vorhergehenden Ansprüche,
**dadurch gekennzeichnet, dass** der zentrale Radsatz 3 einen Offsetzylinder umfasst, um den zentralen Radsatz 3 relativ zu dem zentralen Rahmen 2 um die Radsatzachse 11 zu drehen.

9. Heuwerbungsmaschine 1 nach einem der vorhergehenden Ansprüche,
**dadurch gekennzeichnet, dass** die Arme 8, 9 hochgeschwenkt werden können, um die Heuwerbungsmaschine 1 in eine Transportlage einzustellen, wobei die Hochschwenkachsen 13, 14 in der Transportlage parallel zu der Fahrtrichtung der Heuwerbungsmaschine 1 ausgerichtet sind.

## Revendications

1. Machine de fenaison (1) pour ratisser une récolte se trouvant sur le sol, comprenant un cadre central (2) qui est capable d'être supporté sur le sol par l'intermédiaire d'un jeu de roues central (3) et qui, vu dans la direction normale de déplacement, est disposé au niveau du côté arrière de la machine de fenaison (1), un cadre de couplage (4) pour fixer à un tracteur (5) et formant la liaison entre le tracteur (5) et le cadre central (2), et des rotors entraînables (6, 7) fixés au cadre central (2) par l'intermédiaire de bras (8, 9), lesquels rotors (6, 7) sont pourvus de bras à dents (10) avec des dents de râteau et comprennent, vus dans la direction longitudinale du cadre central (2), au moins un rotor avant (6) et un rotor arrière (7), **caractérisée en ce que** le jeu de roues central (3) est à la fois rotatif et réglable autour d'un axe de jeu de roues vertical (11) par rapport au cadre central (2), est capable d'être fixé au cadre central selon un angle, et **en ce que** le jeu de roues central (3) comprend une seule roue (12).

2. Machine de fenaison (1) selon la revendication 1, **caractérisée en ce que** la machine de fenaison (1) est capable d'être placée dans une position de distribution latérale dans laquelle, vue dans la direction normale de déplacement, la surface utile du rotor arrière (7) chevauche la surface utile du rotor avant (6).

3. Machine de fenaison (1) selon la revendication 1 ou 2, **caractérisée en ce que** la machine de fenaison (1) est capable d'être placée dans une position de largeurs traitées multiples, dans laquelle les rotors (6, 7) sont capables d'être placés de manière telle que la surface utile du rotor arrière (7) soit positionné à une certaine distance par rapport à la surface utile du rotor avant (6) de manière telle qu'une largeur traitée puisse être formée entre les deux rotors (6, 7).

4. Machine de fenaison (1) selon l'une quelconque des revendications précédentes, **caractérisée en ce que**, dans la position de largeurs traitées multiples, le cadre central (2) est capable d'être supporté en totalité entre deux largeurs traitées sur le sol par l'intermédiaire du jeu de roues central (3).

5. Machine de fenaison (1) selon l'une quelconque des revendications précédentes, **caractérisée en ce que** les rotors (6, 7) sont rotatifs dans la même direction.

6. Machine de fenaison (1) selon l'une quelconque des revendications précédentes, **caractérisée en ce que** le cadre de couplage (4) comprend un axe de couplage vertical (25), et **en ce que** le jeu de roues central (3) est relié au cadre de couplage (4) par l'intermédiaire d'une barre d'attelage (26), une rotation du cadre central (2) autour de l'axe de couplage (25) par rapport au cadre de couplage (4) réalisant une rotation dans direction opposée du jeu de roues central (3) par rapport au cadre central (2).

7. Machine de fenaison (1) selon l'une quelconque des revendications 2 à 6, **caractérisée en ce que**, au moins dans la position de distribution latérale, la partie produite de l'axe de roue croise la circonférence du rotor arrière (7).

8. Machine de fenaison (1) selon l'une quelconque des revendications précédentes, **caractérisée en ce que** le jeu de roues central (3) comprend un cylindre décalé pour rotation du jeu de roues central (3) autour de l'axe de jeu de roues (11) par rapport au cadre central (2).

9. Machine de fenaison (1) selon l'une quelconque des revendications précédentes, **caractérisée en ce que** les bras (8, 9) sont capables d'être pliés pour placer la machine de fenaison (1) dans une position de transport, les axes de pliage (13, 14) étant orientés parallèlement à la direction normale de déplacement de la machine de fenaison (1) dans la position de transport.
